(19) Europäisches Patentamt / European Patent Office / Office européen des brevets

(11) **EP 2 919 424 A1**

(12) **EUROPEAN PATENT APPLICATION**

(43) Date of publication:
**16.09.2015 Bulletin 2015/38**

(51) Int Cl.:
*H04L 12/801* (2013.01)    *H04L 12/851* (2013.01)
*H04L 12/833* (2013.01)

(21) Application number: **14000842.6**

(22) Date of filing: **10.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonaktiebolaget L M Ericsson (publ)**
**164 83 Stockholm (SE)**

(72) Inventors:
• **Pályi, Pál**
  **1113 Budapest (HU)**
• **Nádas, Szilveszter**
  **1192 Budapest (HU)**

• **Rácz, Sándor**
  **2700 Cegléd (HU)**

(74) Representative: **Röthinger, Rainer**
  **Wuesthoff & Wuesthoff**
  **Patentanwälte PartG mbB**
  **Schweigerstrasse 2**
  **81541 München (DE)**

Remarks:
•This application was filed on 25-03-2015 as a divisional application to the application mentioned under INID code 62.
•Amended claims in accordance with Rule 137(2) EPC.

(54)    **Combined sequence numbers for drop precedence support**

(57)    The present disclosure generally relates to the field of telecommunication. More specifically, the present disclosure relates to a technique of transporting data packets over a telecommunications transport network. A method of transporting data packets over a telecommunications transport network is provided. The data packets are carried by a plurality of bearers and a drop precedence class is assigned to each data packet of each of the bearers. The method comprises: determining and tagging (S201) a sequence number to each data packet to which a drop precedence class has been assigned, wherein the sequence number is determined based on the amount of the sent data packets of the same drop precedence class and the amount of the sent data packets of all the lower drop precedence classes; forwarding (S202) each tagged data packet for transmission through the transport network; and checking (S203) the sequence number of each received data packet to determine whether there has been a loss of one or more data packets, indicating congestion in the transport network.

Figure 1

EP 2 919 424 A1

**Description**

**Technical field**

The present disclosure generally relates to the field of telecommunication. More specifically, the present disclosure relates to a technique of transporting data packets over a telecommunications transport network.

**Background**

A transport network (TN) is used to carry data signals between a Radio Base Station (RBS), such as a NodeB or an eNodeB in 3G Long-Term Evolution (LTE) networks, and a Serving gateway (S-GW) or Packet Data Network gateway (PDN-GW). A TN may be operated by a mobile network operator or by a third party transport provider. In the latter case there would be a Service Level Agreement (SLA) between the mobile and transport operators. With the rapid growth of digital data telecommunications following the introduction of 3G and 4G technology, TNs may frequently act as bottlenecks in the overall data transport process. Thus, various systems and methods have been proposed for improving or prioritising the way that data packets are transported by the bearers.

Service differentiation in the Radio Access Network (RAN) is one supplementary means for more efficiently handling high volumes of traffic. As a simple example, using service differentiation a higher bandwidth share can be provided for a premium service, and in this way the overall system performance can be improved. As another example, a heavy service such as p2p traffic can be down-prioritized. Implementing such service differentiation methods requires integration into the Quality of Service (QoS) concept of LTE and Universal Mobile Telecommunications System (UMTS) technology. Details of the QoS concept for LTE can be found in the 3rd Generation Project Partnership (3GPP) Technical Specification TS 23.410. The main idea of this concept is that services with different requirements use different bearers. When a User Equipment (UE) attaches to the network a default-bearer is established (typically a best-effort service). However, if the UE invokes services having different QoS parameters then a dedicated bearer is established for each service. In WO 2013/053404, the present inventors have described a mechanism for a per-bearer level service differentiation, that makes the bandwidth sharing among Radio Bearers (RBs) more RAN-controlled. As a way of indicating which service frames (or data packets) are deemed to be within or outside of the Service Level Agreement (SLA) contract, colors are assigned to the data packets according to the bandwidth profile. Note that there is no technical significance to the color itself, which is just used as a convenient way of describing and/or labeling the data packets. Levels of compliance are green when fully compliant, yellow when sufficient compliance for transmission but without performance objectives and red or discarded when not compliant with either. The data packets of a bearer are checked against the compliance requirements by a bandwidth profiler, for example a two-rate, three-color marker. This validation process can be used between two parties (e.g. between two operators) and can be the part of the SLA. In general, in the SLA different requirements are set for green packets and yellow packets. The green packets are "more important" than the yellow packets. To reflect this difference between two types of packets, at a bottleneck point such as on entry to a TN, a color aware active queue management discards yellow packets in preference to green packets when there is congestion (i.e. insufficient bandwidth available in the TN to transport all data packets). Thus, for each RB, a predefined profiling rate (i.e. static green rate) is assigned based on the Quality QoS Class Identifier (QCI) of the RB. This mechanism allows bandwidth guarantees, at least to a certain degree, to be provided for the RBs and is implemented in a RAN node (e.g. Radio Network Controller, RNC, or Serving gateway, S-GW) and operates on a per-bearer basis.

The above per-RB level mechanism can be further extended with the dynamic rate update, i.e., the green rate is calculated based on congestion detection for green packets, as discussed in WO 2013/167174. As an example, if congestion is detected, the green rate will be decreased; otherwise the green rate will gradually increase, e.g. according to an Additive Increase Multiplicative Decrease (AIMD) mechanism. A proposed method of congestion detection is the use of a separate sequence number for each green packet. The separate numbers will then be monitored on the receiving side for the purpose of detecting a gap in them, which indicates congestion in the transport network.

**Summary**

Accordingly, there is a need for an improved mechanism for congestion detection.

According to a first aspect, a method of transporting data packets over a telecommunications transport network is provided. The data packets are carried by a plurality of bearers and a drop precedence (DP) class is assigned to each data packet of each of the bearers. The method comprises the step of determining and tagging a sequence number to each data packet to which a DP class has been assigned. The sequence number is determined based on the amount of the sent data packets of the same DP class and the amount of the sent data packets of all the lower DP classes. The method further comprises the step of forwarding each tagged data packet for transmission through the transport network. The method further comprises the step of checking the sequence number of each received data packet to determine whether there has been a loss of one or more data packets, indicating congestion in the transport network.

A transport network may refer to that of a 3GPP LTE, High-Speed Downlink Packet Access (HSDPA) or WiFi system. Each of the plurality of bearers may carry data packets that relate to different ones of a plurality of services. A series of information rates may be assigned to each of the bearers based on a resource sharing scheme among all the bearers.

A DP class may correspond to a packet 'color', an indication of which may then be added to a data filed in each data packet. In other words, an indication of the packet 'color', corresponding to a drop precedence class, may be added to a data field in each data packet. The indication of the packet 'color' may comprise a Drop Eligibility (DEI) bit and/or a Differentiated Services Control Point (DSCP field in an IP header of the packet. As a simple example, in case of 3 DP classes, the lowest DP class may be assigned with the packet color 'green'; the middle DP class may be assigned with the packet color 'yellow'; and the highest DP class may be assigned with the packet color 'red'. A DP-aware TN bottleneck can then use the color information marked in the data packets by choosing to drop red packets first when there is insufficient bandwidth (congestion).

A sequence number of a data packet may refer to the value of the Frame Sequence Number (FSN) field in the Iub Framing Protocol header or the Sequence Number field in the GPRS Transport Protocol for the User plane (GTP-U) header. Following the above example, for the lowest DP class, i.e, the green packets, the sequence number of a green packet to be sent is determined only based on the amount of the sent green packets. For the middle DP class, i.e. the yellow packets, which is one class higher than the lowest DP class the sequence number of a yellow packet to be sent is determined based on the amount of the sent green packets and the amount of the sent yellow packets. As a consequence, the sequence number of a data packet in the highest DP class will be the global sequence number for all data packets. In this way, the sequence number is determined and tagged to each data packet before it is transported over the transport network.

According to a first possible realization of the method of the first aspect, checking the sequence number of each received data packet may comprise counting the received data packets of the same DP class and all the lower DP classes, and comparing the counted amount with the sequence number of the received data packet. For example, upon the reception of a red packet, all the already received green, yellow and red packets together may be counted and the counted amount may be compared with the sequence number of the last received red packet. In case both numbers are not equal with each other, a sequence number gap is detected, which implies that there has been a loss of one or more data packets and therefore, congestion can be determined.

In accordance with the method of the first aspect, the method may further comprise determining the DP class of the lost one or more data packets on the basis of at least one data packet received after the lost one or more data packets.

If a sequence number gap is detected at a received data packet, e.g. a yellow packet, a conclusion can be drawn in that a data packet has been lost either in the same DP class of the received yellow packet or in a DP class below that of the received yellow packet, i.e, the green packets. Upon the reception of an in-order green packet, however, the DP class of the lost data packet can be determined, i.e. a yellow packet.

As another example, in the case of 5 DP classes DP0-DP4, if an unexpected sequence number is detected in DP4, this may be considered to imply that a data packet from DP4-DP0 must have been lost. If, however, a data packet with an expected sequence number, e.g. in DP1, is received, then it may be considered to imply that the loss must have occurred in DP4-DP2. If, further, a DP2 packet with expected sequence number is received, then it may be concluded that the loss must have occurred in DP4-DP3, etc. Here, the term "expected/unexpected sequence number" may be construed within the meaning of the above-mentioned step of determining and tagging a sequence number to each data packet to be sent, as well as the step of checking the sequence number of each received data packet. According to a refinement of the method of the first aspect, the method may comprise including an effective sequence number in each data packet to be sent. The effective sequence number may be determined based on the amount of the sent data packets of the same DP class. Therefore, taking a red packet to be sent for example, its effective sequence number may be determined only based on the amount of the sent red packets, without taking into account the sent data packets in the lower DP classes.

Accordingly, checking the sequence number of each received data packet may comprise comparing the sequence number of the received data packet with the sum of the effective sequence numbers of the same DP class and all the lower DP classes. One the receiving side, the effective sequence number may also refer to an actual amount of the sent data packets for the given DP class, which is increased by one after each sent packet that belongs to the given DP class. In general, for the DP class i, the sequence number ($SN_i$) is the sum of the effective sequence number $\left( SN_j^e \right)$ of all the lower DP classes j ($0 <= j < i$) and that of the DP class i: $SN_i = \Sigma_{j=0}^{i} SN_j^e.$

The method according to the first aspect, as well as the above-mentioned possible realization thereof, may be used with the Per-packet operator value concept (PPOV) wherein an individual sequence number is assigned to a range of colors.

In accordance with the method of the first aspect, as well as the above-mentioned possible realization thereof, in case of data packets carrying adaptive media content, a loss of one or more data packets can trigger a certain event depending on the DP class of the lost one or more data packets.

According to a second aspect, a method of transmitting data packets over a telecommunications transport network is provided. The data packets are carried by a plurality of bearers and a DP class is assigned to each data packet of each of the bearers. The method comprises the step of determining and tagging a sequence number to each data packet to which a DP class has been assigned. The sequence number is determined based on the amount of the sent data packets of the same DP class and the amount of the sent data packets of all the lower DP classes. The method further comprises the step of forwarding each tagged data packet for transmission through the transport network.

According to a third aspect, a method of receiving data packets over a telecommunications transport network is provided. The data packets are carried by a plurality of bearers and a DP class is assigned to each data packet of each of the bearers. The method comprises checking the sequence number of each received data packet to determine whether there has been a loss of one or more data packets, indicating congestion in the transport network.

In accordance with a first possible realization of the method according to the third aspect, the method may further comprise determining the DP class of the lost one or more data packets on the basis of at least one data packet received after the lost one or more data packets.

According to a fourth aspect, a transmitting entity of a telecommunications network providing data packets for transmission through a transport network is provided. The data packets are carried by a plurality of bearers and a DP class is assigned to each data packet of each of the bearers. The transmitting entity comprises a determining and tagging component. The determining and tagging component is configured to determine and tag a sequence number to each data packet to which a certain DP class has been assigned. The sequence number is determined based on the amount of the sent data packets of the same DP class and the amount of the sent data packets of all the lower DP classes. The transmitting entity further comprises a forwarding component configured to forward each tagged data packet for transmission through the transport network.

According to a fifth aspect, a receiving entity of a telecommunications network providing data packets for transmission through a transport network is provided. The data packets are carried by a plurality of bearers and a DP class is assigned to each data packet of each of the bearers. The receiving entity comprises a checking component configured to check the sequence number of each received data packet to determine whether there has been a loss of one or more data packets, indicating congestion in the transport network.

According to a sixth aspect, a system of a telecommunications network providing data packets for transmission through a transport network is provided. The data packets are carried by a plurality of bearers and a DP class is assigned to each data packet of each of the bearers. The system comprises a transmitting entity and a receiving entity according to the present disclosure. At least one of the transmitting entity and the receiving entity may comprise or be configured as a Serving Gateway, S-GW, or a Packet Data Network Gateway, PDN-GW in a LTE network, or a Radio Network Controller, RNC, or a Gateway GPRS Support Node, GGSN, in a High-Speed Downlink Packet Access, HSDPA, network.

The transmitting entity, the receiving entity and/or the system may be configured to perform the steps of any one of the method aspects as described herein.

In general, the steps of any one of the method aspects described herein may equally be embodied in one or more suitable components, devices or units, e.g. in suitable components of the transmitting entity, the receiving entity and/or the system.

**Brief description of the drawings**

In the following, the present disclosure will further be described with reference to exemplary embodiments illustrated in the figures, in which:

Figure 1      is a block diagram schematically illustrating functional components in a system of a telecommunications network for providing data packets for transmission through a transport network;

Figure 2a      is a flowchart illustrating a first variant of a method embodiment of transporting data packets over a telecommunications transport network;

Figure 2b      is a flowchart illustrating a second variant of the method embodiment of transporting data packets over a telecommunications transport network;

Figure 3      is a flowchart illustrating a method embodiment of receiving data packets over a telecommunications transport network;

Figure 4    schematically illustrates a use of the method embodiment shown in figures 2a and 2b of transporting data packets over a telecommunications transport network with PPOV concept; and

Figure 5    schematically illustrates another use of the method embodiment shown in figures 2a and 2b of transporting data packets over a telecommunications transport network for adaptive media.

**Detailed description**

In the following description, for purposes of explanation and not limitation, specific details are set forth, such as specific network topologies including particular network nodes, in order to provide a thorough understanding of the present disclosure. It will be apparent to one skilled in the art that the present disclosure may be practiced in other embodiments that depart from these specific details. For example, the skilled person will appreciate that the principles described herein may readily be extended to include more than three DP classes. Also, although the present disclosure is described with reference to specific network architectures and environments, the present disclosure may be practiced in any network to which mobile or stationary users may attach. For example, the present disclosure is applicable to cellular networks such as Global System for Mobile Communications (GSM), Universal Mobile Telecommunications System (UMTS), Long Term Evolution (LTE), LTE-advanced (LTE-a) networks, or to Wireless Local Area Network (WLAN) or similar wireless networks, but also to wireline networks such as, for example, the Intranet of a company with some or many separated subsidiaries or the Internet.

Those skilled in the art will further appreciate that functions explained herein below may be implemented using individual hardware circuitry, using software functioning in conjunction with a programmed microprocessor or a general purpose computer, using an Application Specific Integrated Circuit (ASIC) and/or using one or more Digital Signal Processors (DSPs). It will also be appreciated that when the present disclosure is described as a method, it may also be embodied in a computer processor and a memory coupled to a processor, wherein the memory is encoded with one or more programs to perform the methods disclosed herein when executed by the processor.

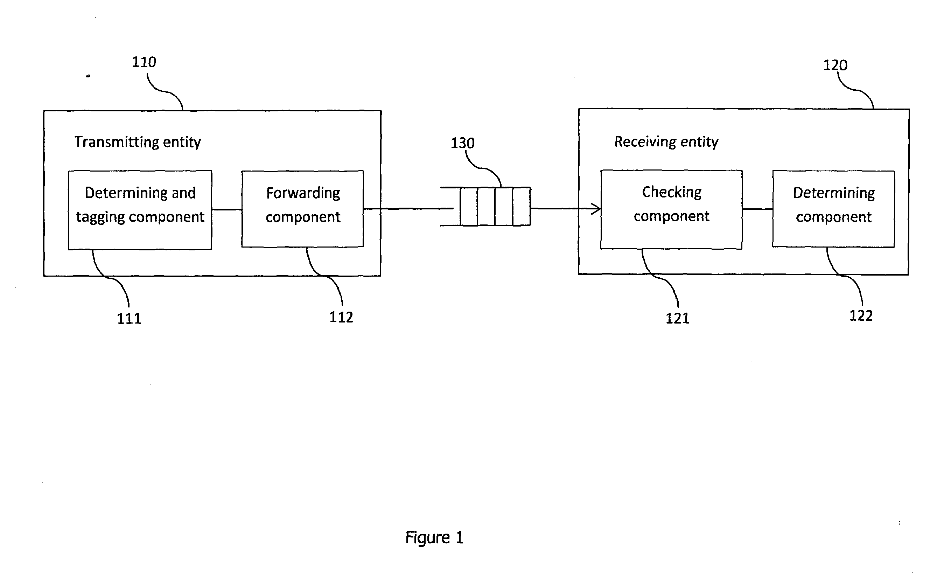

Figure 1 illustrates a block diagram schematically illustrating functional components in a system of a telecommunications network for providing data packets for transmission through a transport network. The system comprises a transmitting entity 110 and a receiving entity 120. For example, in an LTE network, the transmitting entity 110 and the receiving entity 120 may comprise or be configured as a Serving Gateway (S-GW) or a Packet Data Network Gateway (PDN-GW).

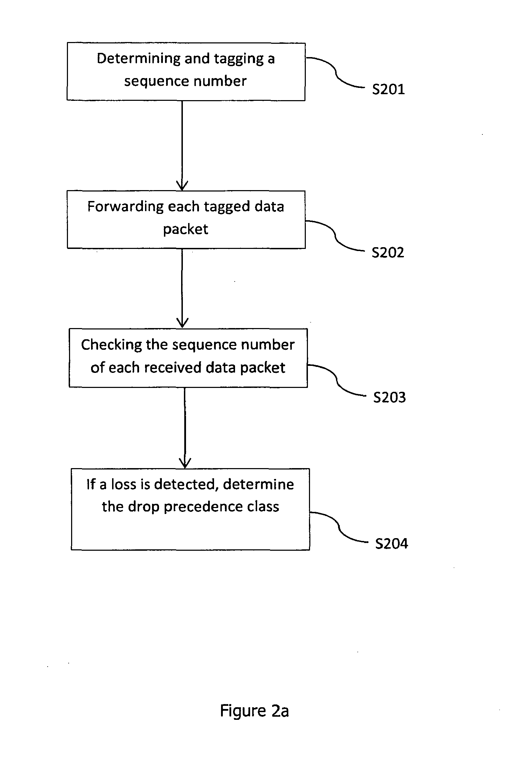

As exemplarily shown in figure 1, the transmitting entity 110 comprises a determining and tagging component 111 and a forwarding component 112. The determining and tagging component 111 is configured to determine and tag a sequence number to each data packet, i.e. to perform step S201 in Figure 2a. The forwarding component 112 is configured to forward each tagged data packet through the transport network 130.

The transport network 130 is drop precedence (DP)-aware. Data packets received from the TN 130 will be checked by a checking component 121 in the receiving entity 120. If there is a gap in the sequence numbers, a loss can be detected. In this case there is no need for any further support from, or modification to, the TN node for feedback based profiling.

The receiving entity 120 may also comprise a determining component 122, which is configured to determine the drop precedence class of the lost one or more data packets.

A method embodiment of the present disclosure will be described with more details in the following.

| | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| SN (r) | 1 | 2 | | 4 | 5 | | 7 | | 9 | | 11 | 12 | | 14 | | 16 | | 18 | 19 |
| Effective SN (r) | 1 | 2 | | 3 | 4 | | 5 | | 6 | | 7 | 8 | | 9 | | 10 | | 11 | 12 |
| SN (y) | | | 1 | | | 2 | | | | 4 | | | 5 | | | | 7 | | |
| Effective SN (y) | | | 1 | | | 2 | | | | 3 | | | 4 | | | | 5 | | |
| SN (g) | | | | | | | | 1 | | | | | | | 2 | | | | |
| Effective SN (g) | | | | | | | | 1 | | | | | | | 2 | | | | |
| Global effective SN | 1 | 2 | 3 | 4 | 5 | 6 | 7 | 8 | 9 | 10 | 11 | 12 | 13 | 14 | 15 | 16 | 17 | 18 | 19 |

Table 1 an exemplary sequence of received data packets

Table 1 shows, as an example, 19 received data packets. The number in a frame refers to the sequence number of a respective data packet, whilst the number without a frame refers to the effective sequence number of a respective data packet. In this example, three DP classes, i.e, three packet colors, have been employed, which are, from the top to bottom, the highest DP class colored red (r), the middle DP class colored yellow (y) and the lowest DP class colored green (g). For ease of understanding, the global effective SN of each received data packet is also given in the example, which indicates the sequence of these data packets as they were on the sending side waiting to be sent.

Taking the third red packet for example, its effective sequence number is 3 because there have been two sent red packets. Note that the yellow packet (global effective SN=3) should not be taken into account when determining the effective sequence number of the red packet. As to the sequence number, however, the above-mentioned yellow packet should be considered. On the sending side, the sequence number may also be calculated based on the effective sequence numbers. In this case, the sequence number of the third red packet is equal to the sum of the effective sequence numbers of the highest DP class and all the lower DP classes plus 1, i.e., 2+1+1=4. Also, being in the highest DP class, the sequence number of a red packet is equal to its global effective SN.

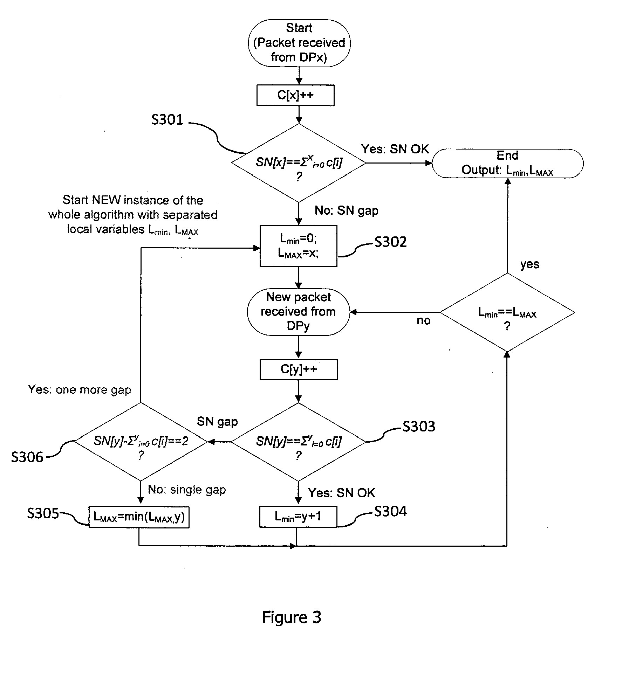

According to the first variant of the method, referring to Figure 2a, only the sequence number will be determined and tagged to each data packet (step S201). Then, each tagged data packet is forwarded in step S202. On the receiving side, the sequence number of each received data packet is checked in step S203. If a loss is detected, the drop precedence class is determined in step S204. The steps S203 and S204 of Figure 2a are further explained in detail referring to Figure 3.

When a data packet is received, the checking component 121 needs to count the received data packets of the same DP class and all the lower DP classes and compare the counted amount with the sequence number of the received data packet (Step 301).

$$SN[X] = \sum_{i=0}^{X} c[i] \qquad\qquad (1)$$

The formula (1) can be applied for checking the sequence number, wherein, X denotes the DP class of the last received data packet; SN[X] denotes the sequence number of such data packet; and each received data packet for each DP or color i (0<=i<=X) should be counted as c[i], respectively. The sum of c[i] (0<=i<=X) is then to be compared with SN[X], as described in Step S301 in Figure 3. If the sequence number in the received data packet is not equal to the sum of the corresponding c[i], a gap in sequence number can be detected.

In this way, from a detected sequence number gap at a received DP-X packet, it can be derived that a data packet has been lost either in the DP class of the received packet ($L_{MAX}=X$) or in any DP classes below the DP class of the received packet ($L_{min}=0$), see Step S302.

If, then, a data packet with an expected sequence number in a lower DP class y is received, Step S303, it can be known that the loss did not occur in that class or in any classes below ($L_{min}=y+1$), Step S304; therefore, the assumption about the color information is refined. Now it may be assumed that the loss occurred in the DP class of the data packet where the gap was originally detected or below but above the DP class of the data packet received with the expected sequence number.

If, however, a data packet from DP class y is received with an unexpected sequence number, it can be known that the loss must have occurred at most in the given DP class, because this has been the lowest DP class so far where the gap is already detectable based on the combined sequence numbers ($L_{MAX}=min(L_{MAX},y)$), see Step S305. If one more gap in the sequence number is detected, a new instance of the whole algorithm can be started with separated local variables $L_{min}$ and $L_{MAX}$, see Step S306.

Referring to the example according to Table 1, if the green |2| (hereinafter, |n| denotes sequence number n) data packet has been lost, as soon as the red |16| is received, it can be known that some data packet of any color could have been lost. As soon as the yellow |7| packet is received, it can be assumed that either a yellow |6| packet or a green |2| packet has been lost (but not red). For example, it is safe to say that a green |2| has been lost after receiving a green |3| packet (not shown in Table 1).

As a conclusion, if a data packet that belongs to DP-X class has an unexpected sequence number, it can be known that some packet from DP-w has been lost, where w ≤ X, and also no packet from DP-y has been lost, where y>X. In other words, in the case of 3 colors, if the loss of a yellow packet is detected, it can be known that either a yellow or a green packet has been lost, but not a red one.

The above-mentioned variant enables faster congestion detection. However, there is a possibility to further enable an earlier detection of the color information of the lost data packet(s).

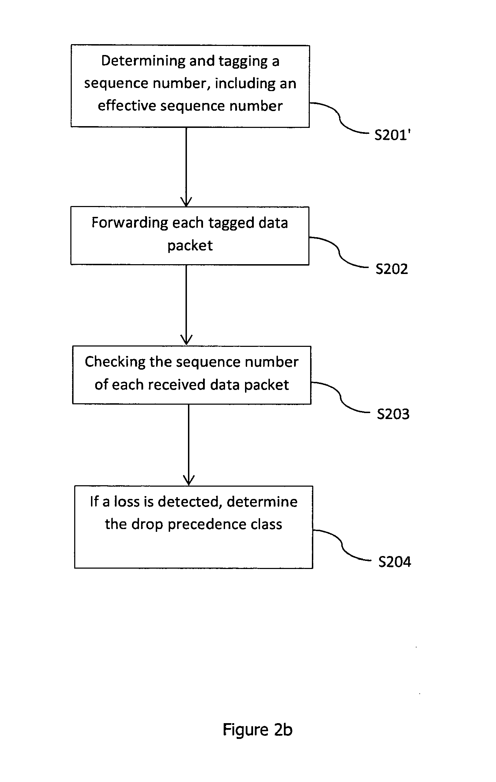

According to a second variant of the method, referring Figure 2b, Step 201', it is proposed not only to include the sequence number but also the effective sequence number in each data packet to be sent. In this case, it is no anymore necessary to count the received data packets at the receiving side. Since the effective sequence number is already included in the data packet, the sequence number of the received data packet can be checked with the sum of the corresponding effective sequence numbers.

Still referring to the example of Table 1, as soon as a red |16| packet is received, it can be known that the lost packet is either a yellow |6| packet or a green |2|, because the effective sequence number of the red packet |16| was increased by one, so no loss among the red packets has been occurred. As soon as a yellow |7| is received, it can be known that a green |2| must have been lost, because no lost occurred among the yellow packets based on the effective sequence number of the yellow |7| packet.

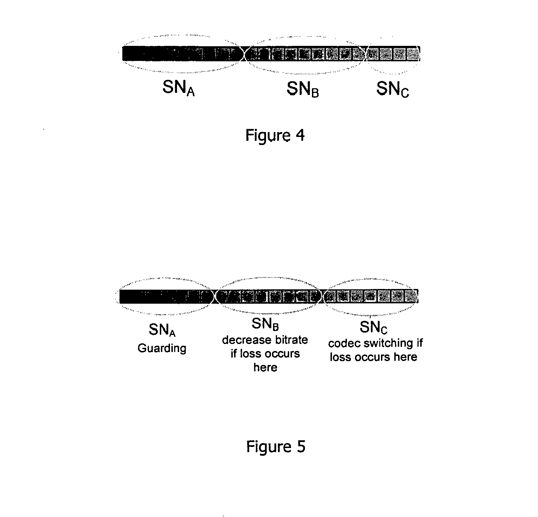

Figure 4 illustrates a use of the method of transporting data packets over a telecommunications transport network with the Per-packet operator value (PPOV) concept. Since, in the case of PPOV, there is a very large number of colors, clustering of colors is proposed to simplify the application of the method according to the present disclosure. In particular, a number of colors may be handled together in terms of sequence number and effective sequence number, therefore, instead for each color, an individual sequence number $SN_A$, $SN_B$ or $SN_C$ is assigned only for a range of colors.

Figure 5 illustrates another use of the method of transporting data packets over a telecommunications transport network, in the case of data packets carrying adaptive media content, e.g. a Guaranteed BitRate (GBR) service. A loss of one or more data packets may trigger a certain event depending on the DP class of the lost one or more data packets. For example, a loss event in a set of red colors may be used for guarding purposes only, a loss in another set yellow colors may be used to indicate that bitrate decrease is needed, and finally a set of green colors may be used to indicate the need to change to another codec, which requires less bandwidth.

## Claims

1. A method of transporting data packets over a telecommunications transport network, wherein the data packets are carried by a plurality of bearers and a drop precedence class is assigned to each data packet of each of the bearers, the method comprising:

   determining and tagging (S201) a sequence number to each data packet to which a drop precedence class has been assigned, wherein the sequence number is determined based on the amount of the sent data packets of the same drop precedence class and the amount of the sent data packets of all the lower drop precedence classes;
forwarding (S202) each tagged data packet for transmission through the transport network; and
checking (S203) the sequence number of each received data packet to determine whether there has been a loss of one or more data packets, indicating congestion in the transport network.

2. The method according to claim 1, further comprising:

   determining (S204) the drop precedence class of the lost one or more data packets on the basis of at least one data packet received after the lost one or more data packets.

3. The method according to claim 1 or 2, wherein checking the sequence number of each received data packet comprises counting the received data packets of the same drop precedence class and all the lower drop precedence classes, and comparing the counted amount with the sequence number of the received data packet.

4. The method according to claim 1 or 2, wherein the method comprises further including an effective sequence number in each data packet, the effective sequence number being determined based on the amount of the sent data packets of the same drop precedence class.

5. The method according to claim 4, wherein checking the sequence number of each received data packet comprises comparing the sequence number of the received data packet with the sum of the effective sequence numbers of the same drop precedence class and all the lower drop precedence classes.

6. The method according to any one of claims 1 to 5, wherein an indication of the packet 'color', corresponding to a drop precedence class, is added to a data field in each data packet.

7. The method according to any one of claims 1 to 6, wherein the method is used with the Per-packet operator value concept, PPOV, wherein an individual sequence number is assigned to a range of colors.

8. The method according to any one of claims 1 to 6, wherein, in case of data packets carrying adaptive media content, a loss of one or more data packets triggers a certain event depending on the drop precedence class of the lost one or more data packets.

9. A method of transmitting data packets over a telecommunications transport network, wherein the data packets are carried by a plurality of bearers and a drop precedence class is assigned to each data packet of each of the bearers, the method comprising:

   determining and tagging (S201) a sequence number to each data packet to which a drop precedence class has been assigned, wherein the sequence number is determined based on the amount of the sent data packets of the same drop precedence class and the amount of the sent data packets of all the lower drop precedence classes; and
   forwarding (S202) each tagged data packet for transmission through the transport network.

10. A method of receiving data packets over a telecommunications transport network, wherein the data packets are carried by a plurality of bearers and a drop precedence class is assigned to each data packet of each of the bearers, the method comprising:

    checking (S203) the sequence number of each received data packet to determine whether there has been a loss of one or more data packets, indicating congestion in the transport network.

11. The method according to claim 10, further comprising:

    determining (S204) the drop precedence class of the lost one or more data packets on the basis of at least one data packet received after the lost one or more data packets.

12. A transmitting entity (110) of a telecommunications network providing data packets for transmission through a transport network (130), wherein the data packets are carried by a plurality of bearers and a drop precedence class is assigned to each data packet of each of the bearers, the transmitting entity comprising:

a determining and tagging component (111) configured to determine and tag a sequence number to each data packet to which a certain drop precedence class has been assigned, wherein the sequence number is determined based on the amount of the sent data packets of the same drop precedence class and the amount of the sent data packets of all the lower drop precedence classes; and

a forwarding component (112) configured to forward each tagged data packet for transmission through the transport network.

13. A receiving entity (120) of a telecommunications network providing data packets for transmission through a transport network (130), wherein the data packets are carried by a plurality of bearers and a drop precedence class is assigned to each data packet of each of the bearers, the receiving entity comprising:

a checking component (121) configured to check the sequence number of each received data packet to determine whether there has been a loss of one or more data packets, indicating congestion in the transport network.

14. A system of a telecommunications network providing data packets for transmission through a transport network, wherein the data packets are carried by a plurality of bearers and a drop precedence class is assigned to each data packet of each of the bearers, the system comprising:

a transmitting entity (110) according to claim 12, and
a receiving entity (120) according to claim 13.

15. The system of claim 14, wherein at least one of the transmitting entity and the receiving entity comprises or is configured as a Serving Gateway, S-GW, or a Packet Data Network Gateway, PDN-GW in a LTE network, or a Radio Network Controller, RNC, or a Gateway GPRS Support Node, GGSN, in a High-Speed Downlink Packet Access, HSDPA, network.

**Amended claims in accordance with Rule 137(2) EPC.**

1. A method of transporting data packets over a telecommunications transport network, wherein the data packets are carried by a plurality of bearers and a drop precedence class is assigned to each data packet of each of the bearers, the method comprising:

determining and tagging (S201), by a transmitting entity (110), a sequence number to each data packet to which a drop precedence class has been assigned, wherein the sequence number is determined based on the sum of the amount of the sent data packets of the same drop precedence class and the amount of the sent data packets of all the lower drop precedence classes;
forwarding (S202), by the transmitting entity (110), each tagged data packet for transmission through the transport network; and
checking (S203), by a receiving entity (120), the sequence number of each received data packet to determine whether there has been a loss of one or more data packets, indicating congestion in the transport network.

2. The method according to claim 1, further comprising:

determining (S204) the drop precedence class of the lost one or more data packets on the basis of at least one data packet received after the lost one or more data packets.

3. The method according to claim 1 or 2, wherein checking the sequence number of each received data packet comprises counting the received data packets of the same drop precedence class and all the lower drop precedence classes, and comparing the counted amount with the sequence number of the received data packet.

4. The method according to claim 1 or 2, wherein the method comprises further including an effective sequence number in each data packet, the effective sequence number being determined based on the amount of the sent data packets of the same drop precedence class.

5. The method according to claim 4, wherein checking the sequence number of each received data packet comprises comparing the sequence number of the received data packet with the sum of the effective sequence numbers of the same drop precedence class and all the lower drop precedence classes.

6. The method according to any one of claims 1 to 5, wherein an indication of the packet 'color', corresponding to a drop precedence class, is added to a data field in each data packet.

7. The method according to any one of claims 1 to 6, wherein, in case of data packets carrying adaptive media content, a loss of one or more data packets triggers a certain event depending on the drop precedence class of the lost one or more data packets.

8. A method of transmitting data packets over a telecommunications transport network, wherein the data packets are carried by a plurality of bearers and a drop precedence class is assigned to each data packet of each of the bearers, the method comprising:

   determining and tagging (S201), by a transmitting entity (110), a sequence number to each data packet to which a drop precedence class has been assigned, wherein the sequence number is determined based on the sum of the amount of the sent data packets of the same drop precedence class and the amount of the sent data packets of all the lower drop precedence classes; and
   forwarding (S202), by the transmitting entity (110), each tagged data packet for transmission through the transport network.

9. A method of receiving data packets over a telecommunications transport network, wherein the data packets are carried by a plurality of bearers and a drop precedence class has been assigned to each data packet of each of the bearers, the method comprising:

   checking (S203), by a receiving entity (120), the sequence number of each received data packet to determine whether there has been a loss of one or more data packets, indicating congestion in the transport network.

10. The method according to claim 9, further comprising:

    determining (S204) the drop precedence class of the lost one or more data packets on the basis of at least one data packet received after the lost one or more data packets.

11. A transmitting entity (110) of a telecommunications network providing data packets for transmission through a transport network (130), wherein the data packets are carried by a plurality of bearers and a drop precedence class is assigned to each data packet of each of the bearers, the transmitting entity comprising:

    a determining and tagging component (111) configured to determine and tag a sequence number to each data packet to which a certain drop precedence class has been assigned, wherein the sequence number is determined based on the sum of the amount of the sent data packets of the same drop precedence class and the amount of the sent data packets of all the lower drop precedence classes; and
    a forwarding component (112) configured to forward each tagged data packet for transmission through the transport network.

12. A receiving entity (120) of a telecommunications network providing data packets for transmission through a transport network (130), wherein the data packets are carried by a plurality of bearers and a drop precedence class has been assigned to each data packet of each of the bearers, the receiving entity comprising:

    a checking component (121) configured to check the sequence number of each received data packet to determine whether there has been a loss of one or more data packets, indicating congestion in the transport network.

13. A system of a telecommunications network providing data packets for transmission through a transport network, wherein the data packets are carried by a plurality of bearers and a drop precedence class is assigned to each data packet of each of the bearers, the system comprising:

    a transmitting entity (110) according to claim 11, and
    a receiving entity (120) according to claim 12.

14. The system of claim 13, wherein at least one of the transmitting entity and the receiving entity comprises or is configured as a Serving Gateway, S-GW, or a Packet Data Network Gateway, PDN-GW in a LTE network, or a Radio Network Controller, RNC, or a Gateway GPRS Support Node, GGSN, in a High-Speed Downlink Packet Access, HSDPA, network.

Figure 1

Figure 2a

Determining and tagging a
sequence number, including an
effective sequence number

— S201'

Forwarding each tagged data
packet

— S202

Checking the sequence number
of each received data packet

— S203

If a loss is detected, determine
the drop precedence class

— S204

Figure 2b

Figure 3

Figure 4

Figure 5

Europäisches
Patentamt

European
Patent Office

Office européen
des brevets

## EUROPEAN SEARCH REPORT

Application Number

EP 14 00 0842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/189327 A1 (KONDA PRAVEEN [US]) 16 August 2007 (2007-08-16) * paragraph [0020] * ----- | 1-15 | INV. H04L12/801 H04L12/851 H04L12/833 |
| Y | WO 2013/167174 A1 (ERICSSON TELEFON AB L M [SE]; HARMATOS JANOS [HU]; GEROE BALAZS PETER) 14 November 2013 (2013-11-14) * page 8, line 12 - line 27 * ----- | 1-15 | |
| A | US 2008/062876 A1 (GIROUX NATALIE [CA] ET AL) 13 March 2008 (2008-03-13) * paragraph [0104] * ----- | 1-15 | |
| A | EP 1 775 893 A1 (HUAWEI TECH CO LTD [CN]) 18 April 2007 (2007-04-18) * claim 1 * ----- | 1-15 | |

TECHNICAL FIELDS
SEARCHED      (IPC)

H04L

The present search report has been drawn up for all claims

| Place of search | Date of completion of the search | Examiner |
|---|---|---|
| The Hague | 25 August 2014 | Perrier, Samuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
      document

EPO FORM 1503 03.82 (P04C01)

**ANNEX TO THE EUROPEAN SEARCH REPORT
ON EUROPEAN PATENT APPLICATION NO.**                    EP 14 00 0842

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2014

| Patent document cited in search report | Publication date | Patent family member(s) | Publication date |
|---|---|---|---|
| US 2007189327 A1 | 16-08-2007 | NONE | |
| WO 2013167174 A1 | 14-11-2013 | NONE | |
| US 2008062876 A1 | 13-03-2008 | NONE | |
| EP 1775893 A1 | 18-04-2007 | CN 1756243 A<br>EP 1775893 A1<br>JP 2008510397 A<br>US 2007147243 A1<br>WO 2006034651 A1 | 05-04-2006<br>18-04-2007<br>03-04-2008<br>28-06-2007<br>06-04-2006 |

EPO FORM P0459

For more details about this annex : see Official Journal of the European Patent Office, No. 12/82

**EP 2 919 424 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013053404 A

- WO 2013167174 A